# EUROPÄISCHE PATENTSCHRIFT

(11) **EP 0 499 040 B1**
(45) Veröffentlichungstag und Bekanntmachung des Hinweises auf die Patenterteilung: **06.04.1994**
(21) Anmeldenummer: 92100632.6
(22) Anmeldetag: 16.01.1992
(51) Int. Cl.: B01J 19/32, D01F 11/12, C04B 35/52

(54) **Korrosions- und hitzebeständige Packung für Stoff- und Wärmeaustauschprozesse**
Corrosion- and heat-resistant packing for mass- and heat-exchange processes
Garnissage résistant à la corrosion et au chaleur utilisable pour des procédés d'échange de masse et de chaleur

(30) Priorität: 14.02.1991 DE 4104447
(43) Veröffentlichungstag der Anmeldung: 19.08.1992
(73) Patentinhaber: SIGRI GREAT LAKES CARBON GmbH, D-65203 Wiesbaden (DE)
(72) Erfinder: Rittner, Siegbert, Dr. Dipl.-Chem., W-6105 Mörfelden-Walldorf (DE); Spiske, Jürgen, Dr. Dipl.-Chem., W-6104 Seeheim (DE); Kompalik, Dieter, Dr. Dipl.-Chem., W-8900 Augsburg (DE); Gruber, Udo, Dipl.-Ing. (FH), W-8902 Neusäss (DE)

(56) Entgegenhaltungen:
- GB-A- 738 186
- GB-A- 2 095 656
- US-A- 3 856 593
- US-A- 4 168 337

## Beschreibung

Die Erfindung betrifft eine aus vorgeformten Einzelteilen zusammengesetzte, geordnete Packung für die Verwendung in Kolonnen und Reaktoren für Stoff- und Energieaustauschprozesse.

Stoff- und Energieaustauschprozesse finden zwischen in gleichen oder in verschiedenen Aggregatzuständen befindlichen Stoffen statt und dienen der An- bzw. Abreicherung, chemischen Umsetzungen, der Reinigung, der Kühlung oder dem Aufheizen von Substanzen. Besonders zu nennen sind hier Verfahren wie Destillation, Rektifikation, Extraktion, Kühlen von Gasen durch Verdunsten von Flüssigkeiten, oder das Abscheiden von Substanzen aus Gasen. Die Apparate, in denen diese Prozesse im allgemeinen durchgeführt werden, sind mit Einbauten zur Führung und Vergleichmäßigung der Fluidströme sowie zur Erzielung möglichst dünner Schichten der an den Austauschprozessen beteiligten Stoffe ausgerüstet. Die Einbauten dienen dem Ziel, einen ständigen innigen Kontakt der am Prozess beteiligten Komponenten zu gewährleisten. Sie können in vielerlei Art ausgeführt sein. In Kolonnen zum Beispiel kennt der Fachmann verschiedenartige Böden wie Glocken-, Tunnel-, Sieb-, Gitter-, Strahl-, Ventil- oder Kaskadenböden. Ebenso finden Füllkörper, die in zufälliger, z.B. durch Schüttung hervorgerufener oder auch geordneter Anordnung den Inhalt einer Destillationsapparatur oder Kolonne bilden, Verwendung.

Eine dritte Gruppe von Einbauten sind die geordneten Packungen (W. Meier, Technische Rundschau Sulzer (2/1979) S. 49-61). Es handelt sich hier um aus meist metallischen oder keramischen Werkstoffen bzw. Kunststoffen hergestellte mit einer Vielzahl von Durchbrüchen versehene Platten, die häufig gewellt oder zick-zack-förmig sind und die in dichter, benachbarter Positionierung zu im allgemeinen zylindrischen Kolonneneinbauten zusammengefügt in bestimmter Weise übereinander in einer Kolonne eingebaut sind. Derartige Packungen sind z.B. unter den Namen Sulzer BX-Packung ^{R}, Mellapak ^{R} oder auch Kerapak ^{R} bekannt geworden. Diese Art von Packungen ist wegen ihres geringen Druckverlustes, geringen Flüssigkeitsrückhaltes, einer hohen Trennstufenzahl, einer geringen Maldistribution in der Verfahrenstechnik weit verbreitet und wird besonders für schwierige Trennaufgaben mit bestem Erfolg verwendet.

Die Wirksamkeit der geordneten Packungen beruht auf ihrer komplizierten Struktur, die durch eine Vielzahl von unterschiedlich angeordneten Kanälen und Durchbrechungen gekennzeichnet ist. Für eine rationelle Herstellung sind deshalb besonders leicht verform- und bearbeitbare Werkstoffe wie Metalle oder Kunststoffe geeignet. Infolgedessen ist ihr Anwendungsbereich trotz ihrer großen Vorteile vor allem aus Korrosionsgründen begrenzt geblieben. Metallische Packungen sind häufig auch bei Anwendung teurer Sonderlegierungen gegen aggressive Stoffe, saurer, basischer oder salzartiger Natur nicht oder nur begrenzt beständig. Intensive Entwicklungsarbeiten führten deshalb zu geordneten Packungen aus Kunststoff und aus Keramik (z.B. Kerapak ^{R}, 1977). Packungen aus derartigen Materialien sind jedoch auch nur begrenzt einsetzbar und können die werkstofftechnischen Lücken nicht vollständig schließen. Kunststoffpackungen mangelt es an Temperaturstabilität und Chemikalienbeständigkeit, besonders gegen organische Agenzien. Sie deformieren sich, quellen oder werden gelöst. Die temperaturbeständigen Keramikpackungen sind gegenüber Alkalien, wässerigen Mineralsäuren und fluorhaltigen Agenzien nicht beständig und weisen eine schlechte Wärmeleitfähigkeit auf.

Korrosionen in geordneten Packungen führen zu einem Abfall des Wirkungsgrades und verunreinigen das Produkt, Deformationen können zu schweren Funktions- und damit Prozeßstörungen führen. Ein weiterer Nachteil ist das vergleichsweise hohe Gewicht der im wesentlichen aus Metallen hergestellten Packungen, das bei der Konstruktion der Apparate und bei ihrer Aufstellung beachtet werden muß und höheren Aufwand verursacht.

Der Erfindung lag deshalb die Aufgabe zugrunde, eine geordnete Packung zu schaffen, die die vorstehenden Nachteile nicht hat, die also sowohl temperaturbeständig, als auch weitgehend korrosionsfest, dabei aber leicht, hochfest, mechanisch stabil, gut wärmeleitend ist und mit geringem technischen Aufwand in jeder gewünschten Form herstellbar ist.

Die Aufgabe wird durch eine aus Einzelteilen zusammengesetzte geordnete Packung gelöst, deren kennzeichnendes Merkmal es ist, daß die Teile, aus denen die Packung zusammengesetzt ist, aus einem kohlenstoffaserverstärkten Kohlenstoff aufgebaut sind, der aus einem Füller aus der Gruppe Kohlenstoffasern oder Kohlenstoffgarne, die durch textile Bindungen miteinander verknüpft sind und einem Matrixkohlenstoff besteht.

Der Begriff Kohlenstoff in den Patentansprüchen und in dieser Beschreibung gilt gleichermaßen für nicht graphitierten wie graphitierten Kohlenstoff, unabhängig davon, ob vom kohlenstoffaserverstärkten Kohlenstoff als solchem - im folgenden auch CFC genannt - oder von der Kohlenstoffmatrix die Rede ist.

Die Verwendung von Kohlenstoff als Werkstoff in Apparaten für Böden oder Füllkörper verschiedener Art ist wegen dessen hervorragender Korrosionsbeständigkeit - Kohlenstoff wird nur durch stärkste Oxidantien angegriffen - und seiner Temperaturbeständigkeit seit langem bekannt (K. Winnacker u. L. Küchler, Chemische Technologie, Band 1, Anorganische Technologie I, S. 504, 505, Carl Hanser Verlag München 1969).

Für diese bekannten Anwendungen wird polygranularer Kohlenstoff verwendet, der aus Füllerkorn und einem kohlenstoffhaltigen Bindemittel durch ein Formgebungsverfahren wie Strangpressen oder Vibrationsverdichten, nachfolgendes Carbonisieren unter Luftabschluß und gegebenenfalls Graphitieren hergestellt wird. Die so erhaltenen Rohlinge in Form von eckigen oder zylinderförmigen Blöcken, Stäben oder Rohren werden durch spanabhebende Bearbeitungsverfahren wie Sägen, Drehen, Bohren, Fräsen, Schleifen in ihre endgültige Form gebracht sowie mit den vorgegebenen Öffnungen oder Durchbrechungen versehen. Diese Verfahrensweise ist für einfach aufgebaute Teile rationell. Teile von komplizierter Gestalt, wie z.B. gefaltete Folien oder blattförmige Strukturen mit komplizierteren Ausnehmungen, Erhebungen oder Rillungen, die gegebenenfalls noch mit einer Vielzahl von Löchern oder Durchbrechungen wie sie beim Aufbau geordneter Packungen verwendet werden, versehen sind, lassen sich auf diesem Wege entweder gar nicht oder nur mit unvertretbar hohem Aufwand herstellen.

Dies ist auch der Grund, weshalb bis jetzt Kohlenstoff nicht für die Herstellung der seit mehr als 20 Jahren bekannten geordneten Packungen verwendet wurde, obwohl der Fachwelt bekannt sein mußte, daß durch die Verwendung von Kohlenstoff eine große Zahl von Werkstoffproblemen hätte gelöst werden können. Erst die Verwendung eines bestimmten CFC-Typs und bestimmter Herstellungsverfahren dazu ermöglichten, in technisch fortschrittlicher und erfinderischer Weise derartige, ganz aus Kohlenstoff bestehende geordnete Packungen zur Verfügung zu stellen.

Ein plattenförmiger CFC-Einsatz für elektrochemische Rieseltürme, der durch Kompaktieren von Cellulosefasern unter Verwendung eines Bindemittels und nachfolgendes Verkoken hergestellt wird, ist in der U.K. Patent Application GB 2 109 006 A beschrieben. Die dadurch erhaltenen Platten, die möglichst eben sein sollen, haben die beträchtliche Stärke von 3 bis 10 mm und damit ein hohes Gewicht. Bohrungen, Durchbrechungen oder Schlitze müssen durch spezielle Formgebungsverfahren unter anderem durch mechanische Bearbeitung eingebracht werden. Die Herstellung kompliziert geformter, gewellter oder zick-zack-förmiger Platten mit einer Stärke von nur max. 0,4 mm, die ohne mechanische Bearbeitung ein dichtes Muster von Durchbrechungen wie sie ein Gewebe hat, aufweisen, ist nicht beschrieben oder nahegelegt. Es ist dieser Schrift auch nicht zu entnehmen, für die Herstellung der CFC-Platten Fasern in textiler Bindung wie gut drapierbare Gewebe aus Garnen zu verwenden und die Platten für die Herstellung geordneter Packungen einzusetzen.

Für die vorliegende Erfindung ist es wesentlich, daß die CFC-Teile, aus denen die geordneten Packungen zusammengesetzt werden einerseits Kohlenstoffasern oder Kohlenstoffasergarne enthalten, die in Form textiler Gewebe, Gelege, Gestricke, Gewirke oder anderer an sich bekannter textiler Verbindungsformen miteinander verknüpft sind und andererseits von einem Formstabilität und zusätzliche Festigkeit verleihenden Matrixkohlenstoff ausgefüllt oder mindestens durchsetzt sind. Die textile Verknüpfung der Garne oder Fasern kann zwei- oder dreidimensional sein, wobei für die meisten Anwendungsfälle die weniger aufwendige zweidimensional verknüpfte Form noch hinreichende Formstabilität und Festigkeit verleiht. Eine andere Form mechanisch und formstabiler Einbauteile besteht aus zwei oder mehr übereinander gelegten, zweidimensional textil verknüpften Garnlagen, die von Matrixkohlenstoff durchsetzt oder gefüllt und durch diesen verbunden sind.

Im einfachsten Fall bestehen die Teile, aus denen die geordneten Packungen zusammengesetzt sind aus ebenen oder gebogenen Platten mit einer Stärke von nicht mehr als 0,4 mm, die aufgrund des textilen Grundgerüsts eine leichte Profilierung und entsprechend der Anzahl und Anordnung der von den Maschen des Gewebes eingeschlossenen Löcher eine Vielzahl von Durchbrechungen aufweisen. Vorteilhaftere Ausführungen haben eingeprägte Profile, die es gestatten, Bereiche der zu einer geordneten Packung zusammengesetzten Platten so im Abstand voneinander zu halten, daß Kanäle entstehen. Die Kanäle und Profile bewirken zusammen mit den Durchbrechungen einen intensiven Stoffaustausch zwischen den Fluidphasen. Besonders bewährt haben sich hier in Zick-zack- oder Wellenform geprägte Platten.

Der Füller der CFC-Teile besteht entweder aus Kohlenstoffendlosfilamenten, aus Kohlenstoffgarnen, die aus Endlosfilamenten hergestellt wurden oder aus aus Stapelfasern hergestellten Garnen. Wegen ihrer größeren Flexibilität und ihrer höheren Porosität wird den aus Stapelfasern hergestellten Garnen im allgemeinen der Vorzug gegeben. Derartige Stapelfasergarne können vorteilhaft hergestellt werden, indem geeignete, unschmelzbar gemachte Kunst- oder Pechfasern zu einer Stapellänge von 2 bis 20 cm, vorzugsweise von 5 bis 15 cm gerissen und die daraus resultierenden Stapelfasern zu einem Garn verarbeitet werden. Es ist andererseits auch möglich, durch Schneiden erzeugte Stapelfasern zu Garnen zu verarbeiten und diese zur Herstellung erfindungsgemäßer CFC-Teile zu verwenden.

Die Endlosfilamente und die Garne können zu einer Vielzahl von als Vorprodukt für die erfindungsgemäßen Platten geeigneten textilen Gebilden weiter verarbeitet werden. Ein Kennzeichen dieser textilen Gebilde soll jedoch eine gute Drapierbarkeit sein. Als besonders vorteilhaft bei der Fertigung der CFC-Teile hat sich ein Gewebe mit Köperbindung erwiesen, da dieses besonders schmiegsam und in sich verschiebbar ist. Durch diese Eigenschaft werden Beschädigungen des Füllergewebes bei der Formgebung der flächigen CFC-Vorproduktkörper vermieden. Die in den Flächen der Teile aus C-faserverstärktem Kohlenstoff befindlichen Poren oder Durchbrechungen können je nach Anwendungszweck oder Größe der Packung eine lichte Weite von 10 bis 10 000 µm aufweisen. Beim Betrieb der geordneten Packungen verzögern diese Poren oder Durchbrechungen das Herabfließen der Flüssigkeit an den Platten- oder Lamellen, so daß für die Austauschvorgänge mehr Zeit zur Verfügung steht. Derartige Strukturen haben außerdem eine größere Oberfläche und bewirken damit eine bessere Verteilung der Stoffe in dünner Schicht und begünstigen damit wiederum die Austauschvorgänge. Die Poren und Durchbrechungen entstehen durch nicht vollständige Erfüllung der zwischen dem Gitterwerk der Fäden bestehenden Hohlräume in den textilen Gebilden und der feinen Hohlräume in den Garnen und zwischen den Filamenten mit Matrixharz. Zusätzlich werden Poren beim Carbonisieren des Matrixharzes gebildet. In vorteilhafter Weise führen die Öffnungen und Poren auch zu einer Gewichtsersparnis der Einbauteile. Die Wahl der Größe und Form der Durchbrechungen richtet sich nach der Größe der Einbauteile und den verfahrenstechnischen Bedingungen.

Die hier beschriebenen geordneten Packungen sind aus einer Vielzahl von der Packungsform jeweils angepaßten, zugeschnittenen, profilierten, z.B. mit Zick-zack-Profilen versehenen Platten in vorgegebener Weise zusammengesetzt. Da die Platten selbst keine Verankerungselemente für ihren Zusammenhalt besitzen, werden sie durch für diesen Zweck hergestellte Verankerungselemente zusammengehalten. Diese Elemente sind im allgemeinen ringförmige Manschetten aus CFC, die die Platten der geordneten Packung an ihrem äußeren Umfang umschließen und zusammenhalten. An ihrer Oberseite sind die Manschetten vertikal geschlitzt. Die durch diese Schlitzung entstandenen Lamellen sind nach außen gebogen.

Sie liegen im eingebauten Zustand an der Apparatewand an und führen die randgängige Flüssigkeit wieder in die Packung zurück. Die CFC-Halteringe werden bevorzugt aus einem aus Endlosfaserbündeln gewebten Gewebe hergestellt. Die dadurch erreichte größere Steifigkeit ist vorteilhaft für diese Anwendung. Für die Halterung können jedoch auch Gewebe verwendet werden, wie sie für die Herstellung der CFC-Platten für den Innenteil der Packung benutzt werden. Packungen eckiger Form oder sehr großen Durchmessers können auch mittels Klemmankern aus bandförmigem CFC, Stabankern und Schrauben oder Arretierstiften aus CFC oder Graphit zusammengespannt werden.

Für die Herstellung der Teile, aus denen die geordneten Packungen zusammengesetzt werden, werden zwei- oder dreidimensional vernetzte textile Gebilde, die aus Garnen hergestellt wurden, verwendet. Ausgangsstoffe für die Herstellung der Garne können Endlosfilamente oder geschnittene bzw. gerissene Stapelfasern mit einer Länge von vorzugsweise 5 bis 15 cm sein. Gerissene Stapelfasern werden für die Herstellung der Garne für die textilen Strukturen aus denen die plattenförmigen Teile gefertigt werden, während Endlosfilamente für die Herstellung der Garne für die die Packungen zusammenhaltenden Manschetten bevorzugt verwendet. Für jede der erwähnten Teilegruppen können aber auch andere Garne verwendet werden. Basismaterial für die Herstellung der Garne können C-Fasern auf Basis Polyacrylnitril (PAN), Cellulose oder Pech sein. Es ist auch möglich, PAN-, Cellulose- oder Pechfasern zunächst unschmelzbar zu machen, aus diesen Fasern Garne herzustellen und diese zu den zwei- oder dreidimensionalen textilen Gebilden zu verarbeiten. Bevorzugte Ausführungsform der textilen Gebilde sind Gewebe mit Köper-Bindung.

Die flächigen textilen Gebilde werden mit einem als Matrixvorprodukt dienenden Harz imprägniert, wobei die Menge des Harzes im allgemeinen vorgegeben ist. In der Regel wird nur so viel Harz in die textilen Gebilde eingebracht, wie für die mechanische Festigkeit des späteren CFC-Körpers notwendig ist. Diese Harzmenge ist so gering, daß in den Zwischenräumen der miteinander verknüpften Garne Durchbrechungen und Hohlräume sowie in den Garnen selbst Poren verbleiben. Der später resultierende CFC-Körper wird dadurch leichter und es wird weniger Harz verbraucht. Das Imprägnieren kann nach jedem bekannten Verfahren erfolgen, z.B. durch Tauchen, durch Aufsprühen, nach der Autoklaventechnik oder mittels einer bei der Prepregherstellung gebräuchlichen Auftragsvorrichtung, z.B. eines Rakels und dieser nachgeschalteten Walzen. Die bei der Prepregherstellung benutzten Methoden bieten Verfahrensvorteile, da die aufgenommene Imprägniermittelmenge durch Einstellung des von den Walzen aufgebrachten Druckes leicht geregelt werden kann. Als Harze kommen alle als Matrixharze gebräuchlichen Harze wie Phenol-, Epoxid-, Furan- oder Polyesterharze aber auch Polyimide oder Bismaleinimidharze in Betracht. Die drei letztgenannten Harztypen kommen aus Preisgründen nur für Spezialanwendungen in Frage. Kriterien für die Auswahl der Harze sind neben ihren Verarbeitungseigenschaften die Höhe der Koksausbeute beim Carbonisieren und die Struktur des erhaltenen Kokses. Der Matrixkoks muß dem CFC-Körper eine ausreichende mechanische Festigkeit verleihen und das offene Porenvolumen muß dem jeweiligen Verwendungszweck angepaßt sein. In der Regel wird man möglichst viele große Poren anstreben, es gibt aber auch Fälle, wo eine möglichst glatte und dichte äußere Oberfläche angestrebt wird. Außer Kunstharzen können auch feinpulverisierte Petrol- oder Steinkohlenteerpeche in trockener oder in suspendierter Form als Matrixprecursor verwendet werden.

Die imprägnierten textilen Gebilde werden sodann durch Verfahren, wie Pressen zwischen Ober- und Unterstempel oder Pressen zwischen Walzen, durch Wickeln oder mittels Vakuumsacktechnik in die gewünschte Form gebracht. Dabei sind die Oberflächen der preß- oder formgebenden Werkzeuge mit den Profilen ausgerüstet, die den angestrebten Formen und Profilierungen entsprechen. Die gebräuchlichsten Profile haben runde, dreieckige, viereckige oder trapezförmige Form, so daß sich bei den gepreßten Platten wellen-, zick-zack-, kasten- oder trapezkastenförmige Profile ergeben. Beim Einlegen der imprägnierten Textilbahnen in die untere Preßform muß Sorge dafür getragen werden, daß die Textilbahnen auch in den Vertiefungen der Form anliegen, um Verspannungen oder ein Reißen der Bahnen zu vermeiden. Die Verwendung von Trennmitteln oder Trennfolien kann das Entformen der Werkstücke erleichtern. Die Formgebung geschieht vorzugsweise bei erhöhter Temperatur, um das Kunstharz wenigstens zum Teil auszuhärten bzw. pulverförmig aufgebrachte Matrixvorprodukte auf die Fasern aufzuschmelzen.

Die gepreßten oder auf andere Weise geformten und durch mindestens teilweises Aushärten in ihrer Form stabilisierten Platten werden sodann unter Sauerstoffausschluß nach bekannten Verfahren carbonisiert und gegebenenfalls graphitiert.

In entsprechender Weise werden die Halteringe hergestellt, die die Packungen umschließen und die einzelnen Lamellen oder Platten der Packung zusammenhalten. Das Formgeben der imprägnierten Gewebelagen zu Ringen geschieht dabei durch Umwickeln von Kernen, die den Durchmesser der entsprechenden Packung haben. Das Abspreizen der durch teilweises Schlitzen des oberen Randes des Geweberinges entstandenen Lamellen geschieht durch entsprechend geformte konische Aufsätze oder innen angebrachte Abstandshalter. Die Wickelkörper werden durch Temperatureinwirkung mindestens teilweise ausgehärtet, sodann entformt und carbonisiert oder graphitiert. Bei geeigneter Werkstoffwahl des Kernes kann auch ohne vorheriges Entformen zusammen mit dem Kern carbonisiert oder/und graphitiert werden.

Für den Zusammenbau der geordneten Packungen werden die Platten nach dem Formgeben im mindestens teilweise ausgehärteten oder im carbonisierten Zustand zu kleineren Platten oder Lamellen zugeschnitten, die zusammengesetzt den Maßen der gewünschten Packung entsprechen, danach zum Packungskern zusammengefügt und über diesen zum Fixieren der Einzelteile je nach Größe der Packung eine oder mehrere kreisförmige Manschetten geschoben. Vorteilhaft ist das Zusammenfügen der zugeschnittenen Plattenteile und der Manschetten zu einer Packung bereits im teilweise ausgehärteten oder im gehärteten aber nicht carbonisierten Zustand unter Verwendung punktueller Verklebungen mit einem geeigneten Kunstharz. Nach dem Carbonisieren der Packungen ergeben diese Klebestellen eine zusätzliche Verankerung der Einzelteile über Koksbrücken. Geordnete Packungen sehr großer Abmessungen oder geordnete Packungen, die keine runde Form haben, werden durch flache aus Gewebeprepregs hergestellte Klemmanker, durch Bandagen oder mit stangenförmigen Ankern aus CFC oder Graphit zusammengehalten.

Die für die nachstehend beschriebenen Versuche benötigten Packungskörper wurden auf folgende Weise hergestellt:

Ein graphitiertes Stapelfasergewebe auf Basis PAN-Fasern mit den folgenden textilen Eigenschaften, Faserdichte 1,70 g/cm³, Garntiter 140 tex, textile Bindung Köper 2/2, Zugkraft des Gewebes nach DIN 53857 500 N, Flächengewicht 235 g/m² wurde mit 50 % eines Phenolharzes, bezogen auf das Gewicht des Gewebes imprägniert. Das imprägnierte Gewebe wurde in einer Gesenkpresse bei einem Preßdruck von beginnend bei 0,5 MPa und bei 2 MPa endend in die gewünschte Form gebracht und anschließend in derselben Presse innerhalb von 15 Minuten und bei einer Temperatursteigerung von Raumtemperatur auf 150 °C gehärtet. Zur Erleichterung beim Entformen wurden zwischen Gewebe und die Teile der Preßform 0,025 mm dünne Kunststoffolien gelegt. Die Preßform bestand aus einer ebenen Matrizen- und einer ebenen Patrizenplatte in die unter einem Winkel von 60° zur Längsachse dreieckförmige Ausfräsungen mit einer Tiefe von 2 mm und einem Abstand der Basisspitzen von 3 mm eingefräst waren. Die entformten, gehärteten CFK-Gewebeprofile wurden sodann in einem Ofen unter Sauerstoffausschluß mit einem Temperaturgradienten von 15 °C/h bis zu einer Temperatur von 1000 °C carbonisiert.

Die Halteringe, die die Packung entlang der Mantelfläche umgaben und zusammenhielten, wurden aus einem aus Endlosfaserbündeln gewebten Kohlenstoffgewebe in ähnlicher Weise hergestellt. Das Gewebe wird durch folgende Daten charakterisiert:
Faserdichte 1,75 bis 1,80 g/cm³, Garntiter 200 tex, textile Bindung Köper 2/2, Zugkraft des Gewebes nach DIN 53857 3500 N, Flächengewicht 240 g/cm³. Das ebenfalls mit 50 Gew.-% Phenolharz imprägnierte Gewebeprepreg wurde in Streifen mit einer Breite von 25 mm und einer Länge von 160 mm geschnitten. Die Streifen wurden zusätzlich im Abstand von ca. 10 mm von ihrer breiten Seite her ca. 5 bis 8 mm eingeschnitten, damit Lamellen entstanden, die später nach außen gebogen werden konnten. Die so zugeschnittenen Streifen wurden sodann über einen feuerfesten und im unteren Teil zylindrischen und im oberen Teil konisch nach außen sich öffnenden Kern gewickelt. Im zylindrischen Teil entsprach der Kern dem Packungsdurchmesser und im oberen Teil am Konusende dem Innendurchmesser der die Packung später aufnehmenden Kolonne. Beim Aufwickeln des Gewebestreifens auf den Kern wurden die durch das Einschneiden entstandenen Lamellen durch die obere konische Erweiterung des Kerns nach außen gebogen und in ihrer Lage fixiert. Danach wurde wie im Vorstehenden beschrieben, gehärtet, carbonisiert und dann entformt.

Aus den carbonisierten Gewebeprofilen wurden sodann den Maßen der geordneten Packung (Durchmesser 50 mm, Höhe 54 mm) entsprechend kleine Platten bzw. Lamellen in der Weise geschnitten, daß die zick-zack-förmigen Profile im Winkel von 60° zu ihrer unteren Kante verliefen. Sodann wurden die zugeschnittenen Teile so zur Form der Packung zusammengesetzt, daß die Profile sich jeweils kreuzend aneinander lagen, so daß eine Vielzahl von schräg von oben nach unten oder umgekehrt kreuzweise verlaufenden Kanälen entstand. Über die zusammengesetzten Teile wurden zwei bis drei Halteringe geschoben und mit Graphitstiften arretiert.

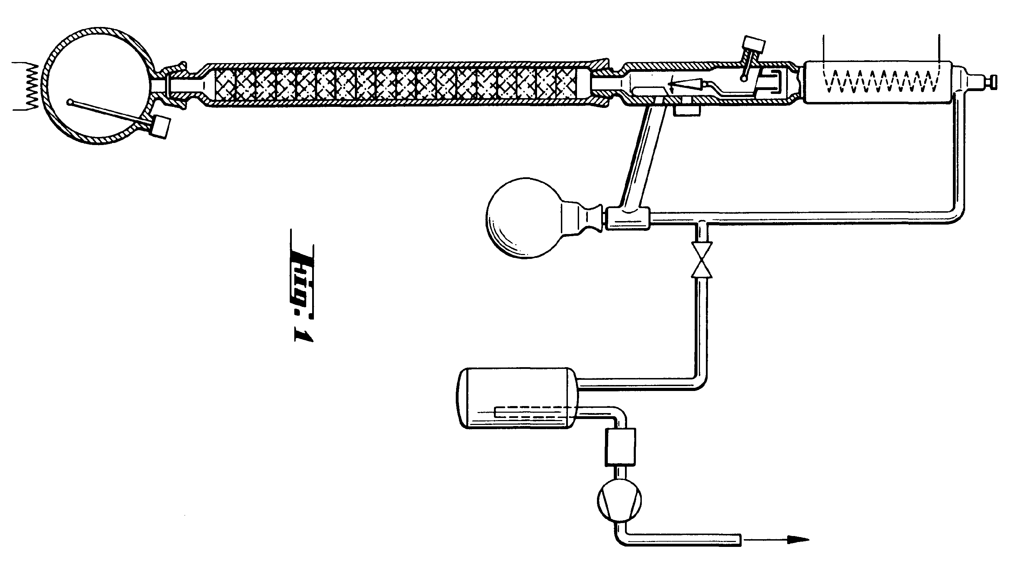

Achtzehn derartige geordnete Packungen aus CFC wurden in eine hier schematisch dargestellte Rektifikationskolonne (Fig.1), deren Funktionsweise jedem Fachmann bekannt ist, eingebaut und mit dieser Anordnung folgende Versuche durchgeführt:

### Versuch 1

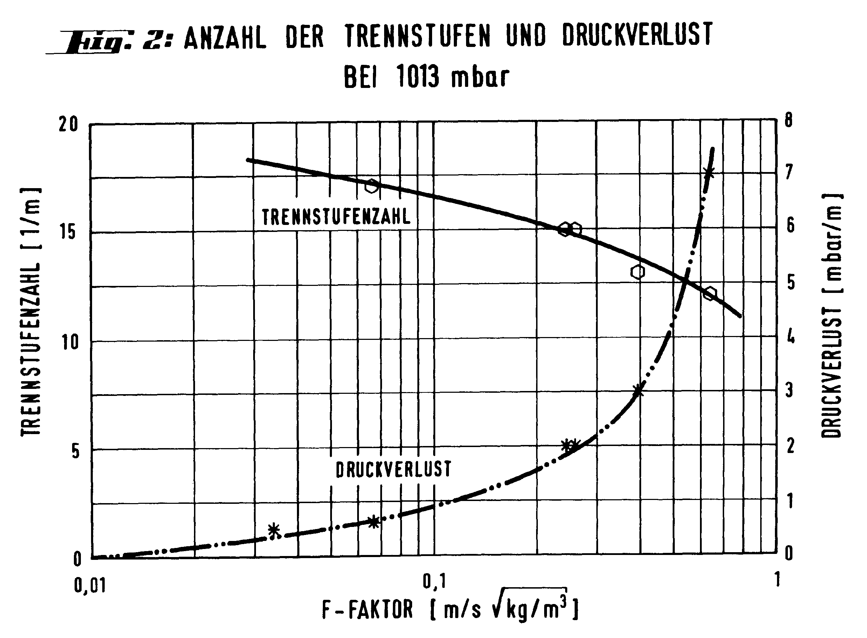

Mit einem Testgemisch aus 625 g Chlorbenzol und 1375 g Ethylbenzol wurde die Trennstufenzahl pro Meter bei einem Druck von 1013 mbar bestimmt. In Abhängigkeit vom Dampfbelastungsfaktor (F-Faktor) lagen die Trennstufenzahlen zwischen 12 und 20. Die Ergebnisse im einzelnen zeigt Fig. 2.

### Versuch 2

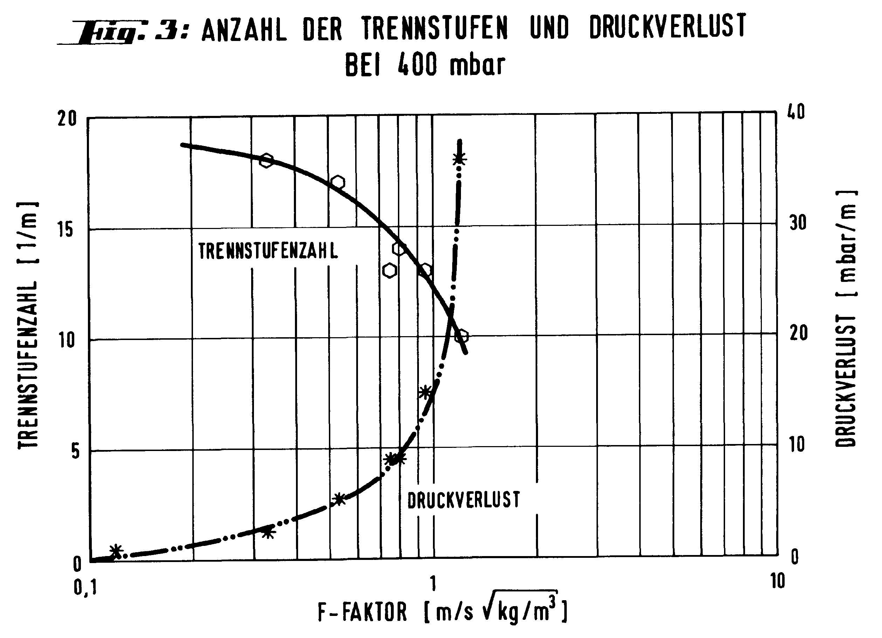

Mit der gleichen Versuchsanordnung wurde die Trennstufenzahl pro Meter unter Vakuum-Rektifikationsbedingungen von 400 mbar getestet. Die Trennstufenzahlen lagen in Abhängigkeit von der Dampfbelastung zwischen 13 und 18. Die Ergebnisse zeigt Fig. 3.

### Versuch 3

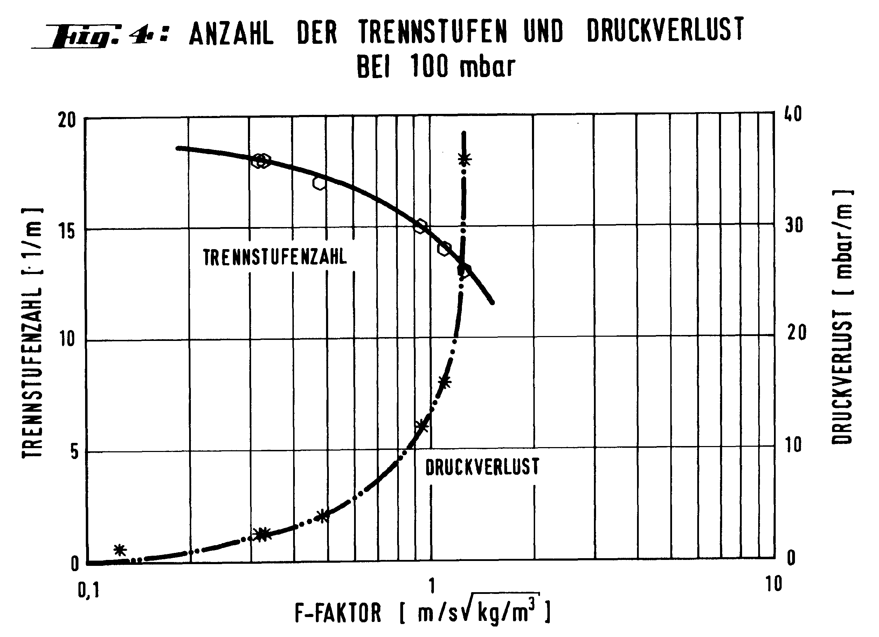

Unter Beibehaltung der Versuchsanordnung wie im Versuch 1 und unter Vakuum-Rektifikationsbedingungen von 100 mbar lagen die Trennstufenzahlen in Abhängigkeit von der Dampfbelastung zwischen 14 und 18 (Fig. 4), während in

### Versuch 4

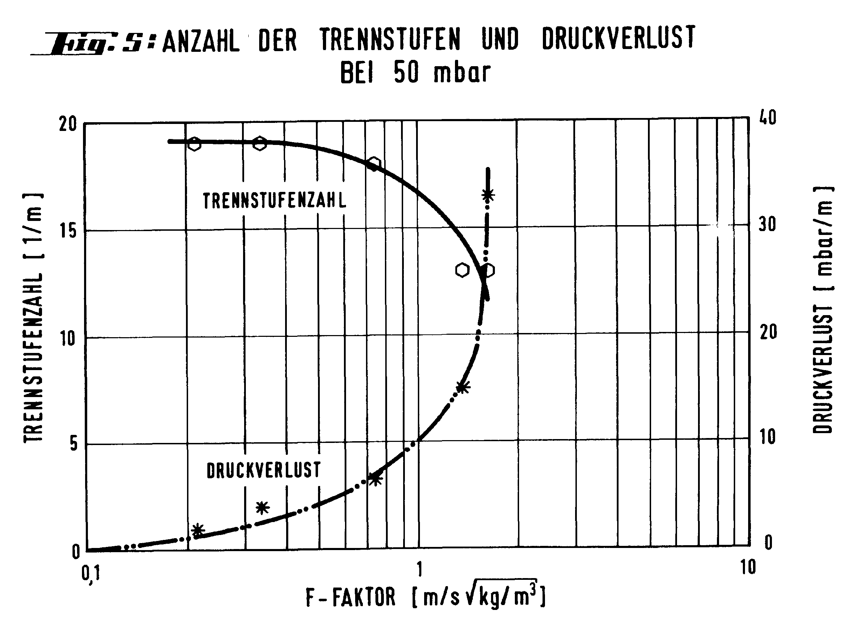

im Vakuum-Rektifikationsbereich von 50 mbar in Abhänigkeit von der Dampfbelastung Trennstufenzahlen von 14 bis 20 gemessen wurden (Fig. 5).

Die Versuche zeigen, daß mit den erfindungsgemäßen geordneten Packungen aus CFC gleich gute Trennleistungen erreicht werden können wie mit bekannten geordneten Packungen. So können z.B. rektifikative Aufkonzentrierungen schwer trennbarer Stoffgemische wie z.B. von Chlortoluol/Nitrochlortoluol oder von Isomerengemischen mit Erfolg durchgeführt werden. Die eigentlichen, den technischen Fortschritt begründenden vorteilhaften Eigenschaften der erfindungsgemäßen Packungen sind jedoch:
- ausgezeichnete Korrosionsbeständigkeit gegen alle Medien mit Ausnahme starker Oxidantien;
- Erosionsbeständigkeit bei Verwendung im carbonisierten, nicht graphitierten Zustand;
- geringes Gewicht. Die Packungen bestehen zu 100 % aus Kohlenstoff. Der hochfeste, biegesteife und in dünnen Lagen hinreichend elastische Werkstoff CFC gestattet zusätzlich filigrane, materialsparende Bauweisen;
- Porosität in weiten Grenzen einstellbar;
- Möglichkeit jede technisch vorteilhafte Form herzustellen;
- Möglichkeit der Einbringung von Durchbrechungen und Löchern ohne spanabhebende mechanische Bearbeitung;
- Temperaturbeständigkeit und Formbeständigkeit bis zu ca. 3000 °C;
- sehr gute Wärmeleitfähigkeit;
- Herstellungsaufwand wie bei bekannten Packungen dieses Typs;
- herstellbar in hochreinen Qualitäten. Packungen dieses Typs sind geeignet für die Verarbeitung von hochreinen Fluiden.

Wegen der Paarung dieser hervorragenden Eigenschaften eignen sich mit den erfindungsgemäßen Packungen ausgerüstete Kolonnen z.B. für Stoff- und Wärmeaustauschprozesse von aggressiven Stoffen wie Salzsäure, Schwefelsäure, Flußsäure, Natronlauge oder für Stoffgemische wie sie in Waschkolonnen der Abluftreinigung auftreten. Verschiedene Prozesse, die wegen der korrodierenden Wirkung der beteiligten Medien problembehaftet waren, können nun einer echten Lösung zugeführt werden. Mit diesen Packungen können hohe Berieselungsdichten bei der Abscheidung schwer löslicher, korrosiver Gase erreicht werden. Durch ihr geringes Gewicht sind sie für Offshore-Anwendungen prädestiniert. Diese Eigenschaft eröffnet aber auch die Möglichkeit zu insgesamt leichteren Anlagenkonstruktionen und damit zu Kosteneinsparungen. Ein anderes Anwendungsgebiet eröffnet sich bei der Behandlung hochreiner Fluide z.B. für den Elektroniksektor oder die Analytik. Ein Übertritt von Verunreinigungen aus den korrosions- und erosionsfesten sowie hochreinen Packungen ist dabei ausgeschlossen.

## Patentansprüche

1. Aus vorgeformten Einzelteilen zusammengesetzte, geordnete Packung für die Verwendung in Kolonnen oder Reaktoren für Stoff- und Wärmeaustauschprozesse,
dadurch gekennzeichnet, daß
die Teile, aus denen die Packung zusammengesetzt ist, aus einem kohlenstoffaserverstärkten Kohlenstoff aufgebaut sind, der aus einem Füller aus der Gruppe Kohlenstoffasern oder Kohlenstoffasergarne, die durch textile Bindungen miteinander verknüpft sind und einem Matrixkohlenstoff besteht.

2. Geordnete Packung nach Patentanspruch 1,
dadurch gekennzeichnet, daß
die Teile, aus denen die geordnete Packung zusammengesetzt ist, aus einem kohlenstoffaserverstärkten Kohlenstoff aufgebaut sind, der aus einem Füller aus der Gruppe Kohlenstoffasern oder Kohlenstoffasergarne, die zweidimensional durch textile Bindungen miteinander verknüpft sind und einem Matrixkohlenstoff besteht.

3. Geordnete Packung nach Patentanspruch 1,
dadurch gekennzeichnet, daß
die Teile, aus denen die geordnete Packung zusammengesetzt ist, aus einem kohlenstoffaserverstärkten Kohlenstoff aufgebaut sind, der aus einem Füller aus der Gruppe Kohlenstoffasern oder Kohlenstoffasergarne, die dreidimensional durch textile Bindungen miteinander verknüpft sind und einem Matrixkohlenstoff besteht.

4. Geordnete Packung nach den Patentansprüchen 1, 2 oder 3,
dadurch gekennzeichnet, daß
die Teile, aus denen die Packung zusammengesetzt ist, mit Profilen versehene ebene oder gebogene flächige Gebilde sind.

5. Geordnete Packung nach den Patentansprüchen 1, 2 und 4,
dadurch gekennzeichnet, daß
die Teile aus denen die geordnete Packung zusammengesetzt ist, aus einem kohlenstoffaserverstärkten Kohlenstoff aufgebaut sind, der aus mehr als einer Lage Kohlenstoffasern, die durch zweidimensionale textile Bindungen miteinander verknüpft sind und die horizontal übereinander angeordnet sind und einem Matrixkohlenstoff besteht.

6. Geordnete Packung nach den Patentansprüchen 1 bis 5,
dadurch gekennzeichnet, daß
der Füller des kohlenstoffaserverstärkten Kohlenstoffs aus Endlosfilamenten oder aus aus Endlosfilamenten hergestellten Garnen besteht.

7. Geordnete Packung nach den Patentansprüchen 1 bis 5,
dadurch gekennzeichnet, daß
der Füller des kohlenstoffaserverstärkten Kohlenstoffs aus aus Stapelfasern hergestellten Garnen besteht.

8. Geordnete Packung nach den Patentansprüchen 1, 2, 3, 5, 6 oder 7,
dadurch gekennzeichnet, daß
der kohlenstoffaserversträkte Kohlenstoff aus einem Füller mit Köperbindung und einer Kohlenstoffmatrix besteht.

9. Geordnete Packung nach den Patentansprüchen 1 bis 8,
dadurch gekennzeichnet, daß
die Flächen der Teile aus kohlenstoffaserverstärktem Kohlenstoff von Poren oder Öffnungen mit einer lichten Weite von 10 bis 10 000 µm durchbrochen sind.

10. Geordnete Packung nach den Patentansprüchen 1 bis 8,
dadurch gekennzeichnet, daß
die Flächen der Teile aus kohlenstoffaserverstärktem Kohlenstoff von Poren oder Öffnungen mit einer lichten Weite von 10 bis 5000 µm durchbrochen sind.

11. Geordnete Packung nach den Patentansprüchen 1 bis 10,
dadurch gekennzeichnet, daß
die die geordnete Packung bildenden Einzelteile durch Elemente aus Kohlenstoff oder aus kohlenstoffaserverstärktem Kohlenstoff zusammengehalten und in ihrer Lage fixiert sind.

## Claims

1. Ordered packing, composed of pre-formed individual parts, for use in columns or reactors for mass transfer and heat exchange processes, characterised in that the parts, of which the packing is composed, are built up out of a carbon fibre-reinforced carbon which consists of a filler from the group carbon fibres or carbon fibre yarns, which are linked with each other by means of textile bindings, and of a matrix carbon.

2. Ordered packing according to claim 1, characterised in that the parts, of which the ordered packing is composed, are built up from a carbon fibre-reinforced carbon which consists of a filler from the group carbon fibres or carbon fibre yarns, which are linked with each other in a two-dimensional manner by means of textile bindings, and of a matrix carbon.

3. Ordered packing according to claim 1, characterised in that the parts, of which the ordered packing is composed, are built up out of a carbon fibre-reinforced carbon which consists of a filler from the group carbon fibres or carbon fibre yarns, which are linked with each other in a three-dimensional manner by means of textile bindings, and of a matrix carbon.

4. Ordered packing according to claims 1, 2 or 3, characterised in that the parts, of which the packing is composed, are planar or bowed areal structures which are provided with profiles.

5. Ordered packing according to claims 1, 2 and 4, characterised in that the parts, of which the ordered packing is composed, are built up out of a carbon fibre-reinforced carbon which consists of more than one layer of carbon fibres, which are linked with each other by means of two-dimensional textile bindings and are arranged horizontally one upon the other, and of a matrix carbon.

6. Ordered packing according to claims 1 to 5, characterised in that the filler of the carbon fibre-reinforced carbon consists of continuous filaments or of yarns produced from continuous filaments.

7. Ordered packing according to claims 1 to 5, characterised in that the filler of the carbon fibre-reinforced carbon consists of yarns produced from staple fibres.

8. Ordered packing according to claims 1, 2, 3, 5, 6 or 7, characterised in that the carbon fibre-reinforced carbon consists of a filler with twill fabric binding and of a carbon matrix.

9. Ordered packing according to claims 1 to 8, characterised in that the surfaces of the parts of carbon fibre-reinforced carbon are perforated by pores or openings with a clear width of 10 to 10 000 µm.

10. Ordered packing according to claims 1 to 8, characterised in that the surfaces of the parts of carbon fibre-reinforced carbon are perforated by pores or openings with a clear width of 10 to 5000 µm.

11. Ordered packing according to claims 1 to 10, characterised in that the individual parts forming the ordered packing are held together by elements made of carbon or of carbon fibre reinforced carbon and are fixed in their position.

## Revendications

1. Garnissage ordonné composé de pièces individuelles préformées pour l'utilisation dans des colonnes et des processus d'échange de matière et de chaleur, caractérisé en ce que les pièces qui composent le garnissage sont constituées de carbone renforcé de fibres de carbone, qui comprend une charge du groupe des fibres de carbone ou des fils de fibres de carbone reliés entre eux par des liaisons textiles et une matrice de carbone.

2. Garnissage ordonné selon la revendication 1, caractérisé en ce que les pièces qui composent le garnissage ordonné sont constituées de carbone renforcé de fibres de carbone, qui comprend une charge du groupe des fibres de carbone ou des fils de fibres de carbone reliés entre eux par des liaisons textiles à deux dimensions et une matrice de carbone.

3. Garnissage ordonné selon la revendication 1, caractérisé en ce que les pièces qui composent le garnissage ordonné sont constituées de carbone renforcé de fibres de carbone, qui comprend une charge du groupe des fibres de carbone ou des fils de fibres de carbone reliés entre eux par des liaisons textiles tridimensionnelles et une matrice de carbone.

4. Garnissage ordonné selon les revendications 1, 2 ou 3, caractérisé en ce que les pièces qui composent le garnissage sont des structures aplaties planes ou incurvées munies de profils.

5. Garnissage ordonné selon les revendications 1, 2 et 4, caractérisé en ce que les pièces qui composent le garnissage ordonné sont constituées de carbone renforcé de fibres de carbone, qui comprend des fibres de carbone en plus d'une couche, ces fibres étant reliées par des liaisons textiles bidimensionnelles disposées horizontalement les unes au-dessus des autres et une matrice de carbone.

6. Garnissage ordonné selon les revendications 1 à 5, caractérisé en ce que la charge du carbone renforcé de fibres de carbone est constituée de filaments sans fin ou de fils constitués de filaments sans fin.

7. Garnissage ordonné selon les revendications 1 à 5, caractérisé en ce que la charge du carbone renforcé de fibres de carbone est constituée de fils produits à partir de fibres coupées.

8. Garnissage ordonné selon les revendications 1, 2, 3, 5, 6 ou 7, caractérisé en ce que le carbone renforcé de fibres est constitué d'une charge à armure croisée et d'une matrice de carbone.

9. Garnissage ordonné selon les revendications 1 à 8, caractérisé en ce que les faces des pièces en carbone renforcé de fibres de carbone sont percées de pores ou d'orifices d'un diamètre de passage de 10 à 10 000 µm.

10. Garnissage ordonné selon les revendications 1 à 8, caractérisé en ce que le faces des pièces en carbone renforcé de fibres de carbone sont percées de pores ou d'orifice d'un diamètre de passage de 10 à 5000 µm.

11. Garnissage ordonné selon les revendications 1 à 10, caractérisé en ce que les pièces individuelles formant le garnissage ordonné sont assemblées par des éléments en carbone ou en carbone renforcé de fibres de carbone et sont maintenues en place.
